# EUROPÄISCHE PATENTSCHRIFT

(11) **EP 0 659 986 B1**
(45) Veröffentlichungstag und Bekanntmachung des Hinweises auf die Patenterteilung: **04.02.1998**
(21) Anmeldenummer: 94118544.9
(22) Anmeldetag: 25.11.1994
(51) Int. Cl.: F01N 3/22, F01N 7/00

(54) **Verfahren zur Überwachung eines Sekundärluftsystems in Verbindung mit dem Abgassystem eines Kraftfahrzeugs**
Method to monitor a secondary air system relating to the exhaust gas system of a motor vehicle
Méthode de surveillance d'un système d'air secondaire rélative à un système de gaz d'échappement d'un véhicule automobile

(30) Priorität: 21.12.1993 DE 4343639
(43) Veröffentlichungstag der Anmeldung: 28.06.1995
(73) Patentinhaber: ROBERT BOSCH GMBH, 70442 Stuttgart (DE)
(72) Erfinder: Schneider, Erich, Dipl.-Ing., D-74366 Kirchheim (DE); Bone, Rainer, D-71739 Oberriexingen (DE); Klenk, Martin, Dipl.-Ing., D-71522 Backnang (DE); Lange, Jörg, Dipl.- Ing., D-71735 Eberdingen (DE); Dambach, Dieter-Andreas, Dipl.-Ing., D-70439 Stuttgart (DE)

(56) Entgegenhaltungen:
- DE-A- 4 225 361
- US-A- 5 119 631
- PATENT ABSTRACTS OF JAPAN vol. 12, no. 400 (M-756) 24. Oktober 1988 & JP-A-63 143 362 (TOYOTA) 15. Juni 1988

## Beschreibung

### Stand der Technik

Die Erfindung geht aus von einem Verfahren zur Überwachung eines Sekundärlufsystems in Verbindung mit dem Abgassystem eines Kraftfahrzeugs gemäß dem Oberbegriff des Anspruchs 1 und einer Vorrichtung zur Durchführung des Verfahrens.

Ein derartiges Verfahren wurde von der kalifornischen Umweltbehörde CARB vorgeschlagen. Beim bekannten Verfahren wird die Sekundärluftpumpe kurzzeitig eingeschaltet und der dadurch verursachte Regelhub des Lambda-Regelkreises beobachtet. Wenn dieser Regelhub einen Schwellwert überschreitet, kann davon ausgegangen werden, daß die Sekundärluftpumpe einen ausreichend großen Luftstrom liefert.

Der Erfindung liegt die Aufgabe zugrunde, eine zuverlässige Überwachung der Sekundärlufteinblasung zu ermöglichen.

Diese Aufgabe wird durch den Anspruch 1 bzw. den Anspruch 10 und die nachfolgend gekennzeichneten Merkmale gelöst.

### Vorteile der Erfindung

Beim erfindungsgemäßen Verfahren wird die Funktionsfähigkeit des Sekundärluftsystems anhand eines Signals für den Sekundärluftstrom beurteilt. Ein Vorteil der Erfindung besteht darin, daß zur Erzeugung des Signals für den Sekundärluftstrom kein zusätzlicher Sensor benötigt wird, da die dazu benötigten Signale entweder ohnehin zur Verfügung stehen oder aus ohnehin zur Verfügung stehenden Signalen gebildet werden können. Die benötigten Signale sind ein Signal für den Ansaugluftstrom, ein Signal für das Luft/Kraftstoff-Verhältnis des von der Brennkraftmaschine angesaugten Gemisches und einem Signal für das Luft/Kraftstoff-Verhältnis stromab der Einmündung einer Sekundärluftleitung in den Abgaskanal.

Zur Beurteilung der Funktionsfähigkeit des Sekundärluftsystems wird ermittelt, ob der Sekundärluftstrom innerhalb eines zulässigen Intervalls liegt, das abhängig vom Betriebszustand der Brennkraftmaschine vorgebbar ist. Dies hat den Vorteil, daß die Beurteilung bei einem beliebigen Betriebszustand durchgeführt werden kann. Somit kann die Beurteilung insbesondere dann durchgeführt werden, wenn die Sekundärluftpumpe ohnehin läuft. Dadurch wird die Einschalthäufigkeit der Sekundärluftpumpe reduziert, was zu einer längeren Lebensdauer führt. Außerdem wird eine unnötige Abgasverschlechterung vermieden.

Ein weiterer Vorteil des erfindungsgemäßen Verfahrens besteht darin, daß es sowohl bei eingeschalteter als auch bei ausgeschalteter Lambdaregelung durchgeführt werden kann.

### Zeichnung

Die Erfindung wird nachstehend anhand der in der Zeichnung dargestellten Ausführungsformen erläutert.

Es zeigen
Figur 1 eine schematische Darstellung einer Brennkraftmaschine mit einem Sekundärluftsystem, das mit dem erfindungsgemäßen Verfahren überwacht wird und
Figur 2 ein Flußdiagramm des erfindungsgemäßen Verfahrens.

### Beschreibung der Ausführungsformen

Um den Katalysator im Abgaskanal einer Brennkraftmaschine möglichst schnell auf Betriebstemperatur zu bringen, kann man in den Abgaskanal zwischen Brennkraftmaschine und Katalysator Frischluft einblasen. Durch die exotherme Reaktion zwischen dem Abgas und der eingeblasenen Frischluft im Abgaskanal und/oder im Katalysator kommt es zu einer beschleunigten Aufheizung des Katalysators. Im Sinne einer möglichst geringen Schadstoffemission wird angestrebt, den Katalysator möglichst schnell auf seine Betriebstemperatur aufzuheizen. Deshalb ist es wichtig, daß das Sekundärluftsystem, das die Frischluft in den Abgaskanal einbläst, ordnungsgemäß arbeitet. Bei der Erfindung wird die Funktionsfähigkeit des Sekundärluftsystems anhand des vom Sekundärluftsystem erzeugten Luftmassenstroms - im folgenden als Sekundärluftstrom bezeichnet - beurteilt. Aus Kostengründen wird aber auf einen Sensor zur Erfassung des Sekundärluftstroms verzichtet. Statt dessen wird der Sekundärluftstrom aus ohnehin bekannten Größen ermittelt. Wie dabei im einzelnen vorgegangen wird, ist im folgenden erläutert:

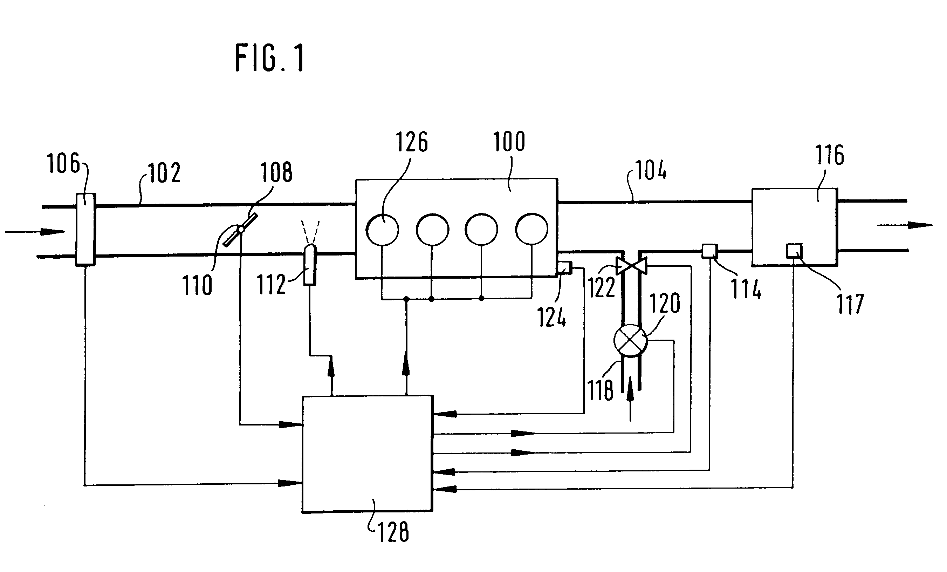

Figur 1 zeigt eine Brennkraftmaschine 100, die mit einem Sekundärluftsystem ausgestattet ist. Über einen Ansaugtrakt 102 wird der Brennkraftmaschine 100 Luft/Kraftstoff-Gemisch zugeführt, und die Abgase werden in einen Abgaskanal 104 abgegeben. Im Ansaugtrakt 102 sind - in Stromrichtung der angesaugten Luft gesehen - ein Luftmengenmesser oder Luftmassenmesser 106, beispielsweise ein Heißfilm-Luftmassenmesser, eine Drosselklappe 108 mit einem Sensor 110 zur Erfassung des Öffnungswinkels der Drosselklappe 108 und wenigstens eine Einspritzdüse 112 angebracht. Im Abgaskanal 104 sind - in Stromrichtung des Abgases gesehen - ein Sauerstoffsensor 114 und ein Katalysator 116 mit einem Temperatursensor 117 angeordnet. Stromauf des Sauerstoffsensors 114 mündet eine Sekundärluftleitung 118 in den Abgaskanal 104. Durch die Sekundärluftleitung 118 kann mittels einer Sekundärluftpumpe 120 Frischluft in den Abgaskanal 104 eingeblasen werden. Zwischen der Sekundärluftpumpe 120 und der Einmündung der Sekundärluftleitung 118 in den Abgaskanal 104 ist ein Ventil 122 angeordnet. Das Ventil 122 ist beispielsweise erforderlich, um bei ausgeschalteter Sekundärluftpumpe 120 den Abgaskanal 104 abzudichten. Weiterhin kann das Ventil 122 dazu verwendet werden, den Sekundärluftstrom zu beeinflussen.

An der Brennkraftmaschine 100 ist ein Drehzahlsensor 124 angebracht. Weiterhin besitzt die Brennkraftmaschine 100 beispielsweise vier Zündkerzen 126 zur Zündung des Luft/Kraftstoff-Gemisches in den Zylindern. Die Ausgangssignale des Luftmengenmessers oder Luftmassenmessers 106, des Sensors 110 zur Erfassung des Öffnungswinkels der Drosselklappe 108, des Sauerstoffsensors 114, des Temperatursensors 117 und des Drehzahlsensors 124 werden einem zentralen Steuergerät 128 über entsprechende Verbindungsleitungen zugeführt. Das zentrale Steuergerät 128 wertet die Sensorsignale aus und steuert über weitere Verbindungsleitungen die Einspritzdüse bzw. die Einspritzdüsen 112, die Sekundärluftpumpe 120, das Ventil 122 und die Zündkerzen 126 an.

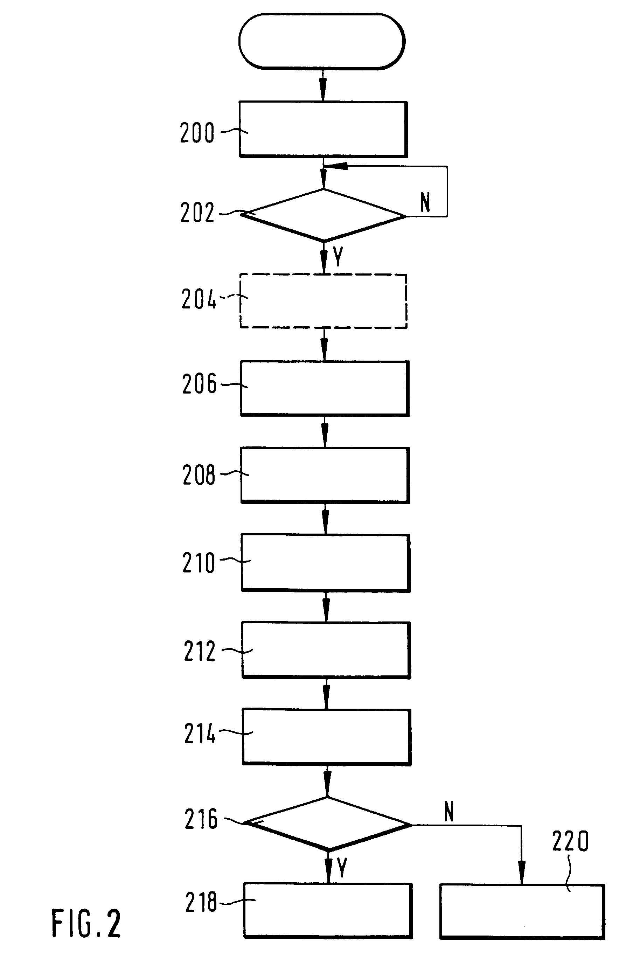

Figur 2 zeigt ein Flußdiagramm des erfindungsgemäßen Verfahrens. In einem ersten Schritt 200 wird die Sekundärluftpumpe 120 eingeschaltet und das Ventil 122 wird geöffnet. Der Schritt 200 wird in der Regel unmittelbar oder kurze Zeit nach Starten der Brennkraftmaschine 100 ausgeführt, um den Katalysator 116 möglichst schnell auf seine Betriebstemperatur aufzuheizen und/oder den Schadstoffanteil im Abgas in der Warmlaufphase der Brennkraftmaschine 100 zu verringern. An Schritt 200 schließt sich ein Schritt 202 an, in dem abgefragt wird, ob der Sauerstoffsensor 114 betriebsbereit ist. Schritt 202 wird so lange ausgeführt, bis die Abfrage erfüllt ist. Ist die Abfrage des Schrittes 202 erfüllt, d. h. der Sauerstoffsensor 114 ist betriebsbereit, so schließt sich ein Schritt 204 an.

Der Schritt 204 ist gestrichelt dargestellt, da er in einem weiter unten beschriebenen Ausführungsbeispiel entfällt. Im Schritt 204 wird abgewartet, bis eine vorgebbare Bedingung erfüllt ist, und anschließend wird die Lambda-Regelung eingeschaltet. Mit der Lambda-Regelung wird die Luftzahl auf einen Wert 1 oder einen anderen geeigneten Wert geregelt. Die vorgebbare Bedingung wird in der Regel so abgefaßt, daß die Lambda-Regelung erst dann eingeschaltet wird, wenn der Katalysator 116 zumindest teilweise seine Mindestbetriebstemperatur erreicht hat. Die Bedingung wird in der Regel so formuliert, daß abgefragt wird, ob ein Schwellwert für eine mit der Katalysatortemperatur zusammenhängenden Größe überschritten ist. Eine solche Größe ist die Temperatur des Katalysators 116, die entweder mit dem Sensor 117 erfaßt wird oder mit Hilfe eines Modells ermittelt wird, die seit Starten der Brennkraftmaschine 100 angesaugte Luftmasse oder Luftmenge, die seit Starten der Brennkraftmaschine 100 eingespritzte Kraftstoffmenge unter der Voraussetzung, daß ein stöchiometrisches Luft/Kraftstoff-Verhältnis vorliegt, die Anzahl der Kurbelwellenumdrehungen seit Starten der Brennkraftmaschine 100, die seit Starten der Brennkraftmaschine 100 verstrichene Zeit, die Abgastemperatur, die Temperatur der Brennkraftmaschine 100 usw. Die Bedingung kann aber auch so gestaltet sein, daß die Lambda-Regelung bereits eingeschaltet wird, wenn der Katalysator seine Mindestbetriebstemperatur noch nicht erreicht hat. Weiterhin ist es möglich, die Bedingung so zu gestalten, daß sie immer erfüllt ist, d. h. die Lambda-Regelung wird sofort eingeschaltet.

An Schritt 204 schließt sich ein Schritt 206 an. In Schritt 206 wird der Ansaugluftstrom ermittelt, d. h. der Luftmassenstrom oder Luftmengenstrom im Ansaugtrakt 102. Der Ansaugluftstrom kann beispielsweise aus dem Ausgangssignal eines Luftmassenmessers oder Luftmengenmessers 106, oder aus einem Lastsignal und der Drehzahl ermittelt werden. Das Lastsignal kann seinerseits aus dem Drosselklappenwinkel, aus dem Druck stromab der Drosselklappe 108 oder anderen geeigneten Signalen abgeleitet werden. An Schritt 206 schließt sich ein Schritt 208 an, in dem die pro Zeit zugemessene Kraftstoffmasse ermittelt wird. Dies kann beispielsweise mit Hilfe der Vorsteuerkennfelder für die Lambda-Regelung, dem Regelhub der Lambda-Regelung und der Drehzahl geschehen. Alternativ dazu kann die pro Zeit zugemessene Kraftstoffmasse auch aus der Einspritzzeit und der Drehzahl ermittelt werden.

Auf Schritt 208 folgt ein Schritt 210. In Schritt 210 wird das Luft/Kraftstoff-Verhältnis des von der Brennkraftmaschine 100 angesaugten Gemisches ermittelt. Dazu wird der Ansaugluftstrom durch die pro Zeit zugemessene Kraftstoffmasse dividiert. Soll das Luft/Kraftstoff-Verhältnis als Luftzahl ausgedrückt werden, so ist noch durch die Zahl 14,7 zu dividieren, die das stöchiometrische Luft/Kraftstoff-Verhältnis angibt.

An Schritt 210 schließt sich ein Schritt 212 an, in dem das Luft/Kraftstoff-Verhältnis im Abgaskanal 104 stromab der Einmündung der Sekundärluftleitung 118 ermittelt wird. Die genaue Vorgehensweise hängt dabei von der Ausführungsform des Sauerstoffsensors 114 ab und ist dem Fachmann geläufig. Es kann beispielsweise die vom Sauerstoffsensor 114 ausgegebene Spannung erfaßt und daraus das Luft/Kraftstoff-Verhältnis ermittelt werden.

An Schritt 212 schließt sich ein Schritt 214 an, in dem der Sekundärluftstrom aus den in den Schritten 206, 210 und 212 ermittelten Größen berechnet wird. Dabei wird das im Schritt 212 ermittelte Luft/Kraftstoff-Verhältnis im Abgaskanal 104 durch das im Schritt 210 ermittelte Luft/Kraftstoff-Verhältnis im Ansaugtrakt 102 dividiert, und vom Ergebnis der Division wird der Wert 1 subtrahiert. Durch Multiplikation mit dem Ansaugluftstrom ergibt sich schließlich der Sekundärluftstrom.

Auf Schritt 214 folgt ein Schritt 216. In Schritt 216 wird anhand des im Schritt 214 ermittelten Sekundärluftstroms die Funktionsfähigkeit des Sekundärluftsystems beurteilt. Dazu wird geprüft, ob der Sekundärluftstrom innerhalb eines vorgebbaren Intervalls liegt. Ist dies der Fall, so schließt sich an Schritt 216 ein Schritt 218 an, in dem gefolgert wird, daß das Sekundärluftsystem ordnungsgemäß arbeitet. Ist die Abfrage des Schrittes 216 dagegen nicht erfüllt, so schließt sich ein Schritt 220 an, in dem festgestellt wird, daß ein Fehler vorliegt. Falls möglich, werden in Schritt 220 geeignete Maßnahmen zur Beseitigung des Fehlers getroffen. Außerdem kann ein Eintrag in einen Fehlerspeicher erfolgen und eine optische oder akustische Anzeige des Fehlers. Sowohl mit Schritt 218 als auch mit Schritt 220 ist der Durchlauf des Flußdiagramms beendet.

Eine besonders zuverlässige Überwachung des Sekundärluftsystems läßt sich dadurch erreichen, daß das für den Schritt 216 vorgebbare Intervall des Sekundärluftstroms abhängig vom Betriebszustand der Brennkraftmaschine 100 vorgebbar ist. Auf diese Art und Weise kann berücksichtigt werden, daß selbst bei einwandfrei funktionierendem Sekundärluftsystem der Sekundärluftstrom je nach Betriebszustand der Brennkraftmaschine 100 schwanken kann. Wenn beispielsweise ein sehr hoher Abgasgegendruck herrscht, wird sich ein geringerer Sekundärluftstrom einstellen als bei kleinem Abgasgegendruck.

Die bereits weiter oben erwähnte Ausführungsform, bei der der Schritt 204 des Flußdiagramms entfällt, bezieht sich auf einen Anwendungsfall, bei dem die Funktionsprüfung des Sekundärluftsystems bei ausgeschalteter Lambda-Regelung, d. h. in gesteuertem Betrieb, durchgeführt wird. Diese Ausführungsform kann beispielsweise dann eingesetzt werden, wenn eine sehr leistungsstarke Sekundärluftpumpe vorhanden ist. Dann kann der Fall auftreten, daß eine Lambda-Regelung bei eingeschalteter Sekundärluftpumpe nicht möglich ist, da der maximale Reglerhub der Lambda-Regelung nicht ausreicht, das gewünschte Luft/Kraftstoff-Verhältnis einzustellen. Unter Umständen wird in diesem Fall eine Einregelung auf das gewünschte Luft/Kraftstoff-Verhältnis gar nicht angestrebt, da dies dazu führen würde, daß die Brennkraftmaschine 100 mit einem sehr fetten Luft/Kraftstoff-Gemisch betrieben wird.

Ein weiterer Grund für den gesteuerten Betrieb kann darin bestehen, daß die Brennkraftmaschine 100 in der Warmlaufphase mit einem Luft/Kraftstoff-Gemisch betrieben werden soll, das sich mit der vorhandenen Lambda-Sonde nicht einregeln läßt. Dies ist beispielsweise dann der Fall, wenn ein Sauerstoffsensor 114 verwendet wird, dessen Ausgangsspannung sich ungefähr bei einer Luftzahl von 1 sprunghaft ändert und gleichzeitig die gewünschte Luftzahl deutlich von 1 abweicht.

Wenn also aus irgendeinem Grund die Lambda-Regelung nicht eingeschaltet werden soll, so kann das erfindungsgemäße Verfahren dennoch angewendet werden, wobei der Schritt 204 entfällt. Weiterhin besteht dann zur Ermittlung des Luft/Kraftstoffverhältnisses im Abgaskanal 104 bei eingeschalteter Sekundärluftpumpe 120 gemäß Schritt 212 die Möglichkeit, die Lambda-Vorsteuerung über eine Rampe so lange zu verschieben, bis bei einem Sauerstoffsensor 114 mit einer stufenartigen Kennlinie ein Sprung im Ausgangssignal auftritt. D. h., in diesem Fall kann das für das erfindungsgemäße Verfahren benötigte Luft/Kraftstoff-Verhältnis stromab der Einmündung der Sekundärluftleitung 118 in den Abgaskanal 104 mit einem Sauerstoffsensor 114 ermittelt werden, dessen Ausgangssignal sich ungefähr bei einer Luftzahl von 1 sprunghaft ändert. Das Luft/Kraftstoff-Verhältnis des von der Brennkraftmaschine 100 angesaugten Gemisches wird in diesem Fall zeitgleich mit dem Auftreten des Sprungs aus dem Ansaugluftstrom, den Vorsteuerwerten der Lambda-Vorsteuerung und der Drehzahl ermittelt.

Bei allen Ausführungsbeispielen kann jeweils das Signal für den Ansaugluftstrom und/oder das Signal für das Luft/Kraftstoff-Verhältnis des von der Brennkraftmaschine 100 angesaugten Gemisches und/oder das Signal für das Luft/Kraftstoff-Verhältniss stromab der Einmündung einer Sekundärluftleitung 118 in den Abgaskanal 104 usw. über ein vorgebbares Zeitintervall gemittelt werden.

## Patentansprüche

1. Verfahren zur Überwachung eines Sekundärluftsystems in Verbindung mit dem Abgassystem eines Kraftfahrzeuges, dadurch gekennzeichnet,
- daß ein Signal für den Sekundärluftstrom ermittelt wird, aus
-- einem Signal für den Ansaugluftstrom,
-- einem Signal für das rechnerisch ermittelte Verhältnis von Ansaugluftstrom zu pro Zeit zugemessenem Kraftstoff,
-- einem Signal für das mittels einer Sonde (114) ermittelte Luft/Kraftstoff-Verhältnis stromab der Einmündung einer Sekundärluftleitung (118) in den Abgaskanal (104) und
- daß die Funktionfähigkeit des Sekundärluftsystems anhand des Signals für den Sekundärluftstrom beurteilt wird, wobei der Ansaugluftstrom der von der Brennkraftmaschine (100) angesaugte Luftmengen- oder Luftmassenstrom ist.

2. Verfahren nach Anspruch 1, dadurch gekennzeichnet, daß das Sekundärluftsystem als funktionsfähig beurteilt wird, wenn das Signal für den Sekundärluftstrom innerhalb eines vorgebbaren Intervalls liegt und als nicht funktionsfähig, wenn das Signal außerhalb des Intervalls liegt, wobei das Intervall abhängig vom Betriebszustand der Brennkraftmaschine (100) vorgebbar ist.

3. Verfahren nach einem der vorhergehenden Ansprüche, dadurch gekennzeichnet, daß zur Ermittlung des Signals für den Sekundärluftstrom die Abweichung des Quotienten aus dem Luft/Kraftstoff-Verhältnis stromab der Einmündung der Sekundärluftleitung (118) in den Abgaskanal (104) und dem rechnerisch ermittelten Verhältnis von Ansaugluftstrom zu pro Zeit zugemessenem Kraftstoff vom Wert 1 mit dem Ansaugluftstrom multipliziert wird.

4. Verfahren nach einem der vorhergehenden Ansprüche, dadurch gekennzeichnet, daß das Signal für den Ansaugluftstrom von einem Luftmassenmesser oder Luftmengenmesser erzeugt wird oder aus einem Signal für die Last und einem Signal für die Drehzahl gebildet wird.

5. Verfahren nach einem der vorhergehenden Ansprüche, dadurch gekennzeichnet, daß das Signal für den Ansaugluftstrom und/oder das Signal für das rechnerisch ermittelte Verhältnis von Ansaugluftstrom zu pro Zeit zugemessenem Kraftstoff und/oder das Signal für das Luft/Kraftstoff-Verhältniss stromab der Einmündung einer Sekundärluftleitung (118) in den Abgaskanal (104) über ein vorgebbares Zeitintervall gemittelt werden.

6. Verfahren nach einem der vorhergehenden Ansprüche, dadurch gekennzeichnet, daß die Funktionsfähigkeit des Sekundärluftsystems dann überprüft wird, wenn die Sekundärluftpumpe (120) ohnehin eingeschaltet ist, insbesondere in der Warmlaufphase der Brennkraftmaschine (100).

7. Verfahren nach einem der vorhergehenden Ansprüche, dadurch gekennzeichnet, daß die Funktionsfähigkeit des Sekundärluftsystems bei betriebsbereiter Sonde (114) zur Ermittlung des Luft/Kraftstoff-Verhältnisses überprüft wird.

8. Verfahren nach einem der vorhergehenden Ansprüche, dadurch gekennzeichnet, daß die Funktionsfähigkeit des Sekundärluftsystems bei ausgeschalteter Lambda-Regelung im gesteuerten Betrieb überprüft wird.

9. Verfahren nach einem der Ansprüche 1 bis 7, dadurch gekennzeichnet, daß die Lambda-Regelung eingeschaltet wird, sobald eine Bedingung erfüllt ist bezüglich der Zeit seit Starten der Brennkraftmaschine (100), bezüglich der gemessenen oder mit einem Modell ermittelten Temperatur des Katalysators (116), bezüglich der seit Starten der Brennkraftmaschine (100) aufintegrierten Luftmasse oder eingespritzten Kraftstoffmasse oder bezüglich der Anzahl der Kurbelwellenumdrehungen seit Starten der Brennkraftmaschine (100) und daß die Funktionsfähigkeit des Sekundärluftsystems bei eingeschalteter Lambda-Regelung überprüft wird.

10. Vorrichtung zur Überwachung eines Sekundärluftsystems in Verbindung mit dem Abgassystem eines Kraftfahrzeugs, gemäß dem Verfahren nach Anspruch 1, gekennzeichnet durch
- erste Mitteln (106) zur Erzeugung eines Signals für den Ansaugluftstrom,
- zweite Mitteln zur Erzeugung eines Signals für das rechnerisch ermittelte Verhältnis von Ansaugluftstrom zu pro Zeit zugemessenem Kraftstoff,
- dritte Mitteln (114) zur Erzeugung eines Signals für das Luft/Kraftstoff-Verhältniss stromab der Einmündung einer Sekundärluftleitung (118) in den Abgaskanal (104) und
- vierte Mitteln zur Erzeugung eines Signals für den Sekundärluftstrom aus den von den ersten, zweiten und dritten Mitteln (114) erzeugten Signalen,
- fünfte Mitteln zur Beurteilung der Funktionfähigkeit des Sekundärluftsystems anhand des von den vierten Mitteln erzeugten Signals, wobei
- der Ansaugluftstrom der von der Brennkraftmaschine (100) angesaugte Luftmengen- oder Luftmassenstrom ist.

## Claims

1. Method to monitor a secondary air system in conjunction with the exhaust gas system of a motor vehicle, characterized in that
- a signal for the secondary air flow is determined, from
-- a signal for the intake air flow,
-- a signal for the ratio, determined by calculation, of the intake air flow to fuel added per unit of time,
-- a signal for the air/fuel ratio determined by means of a probe (114) downstream of the opening of a secondary air line (118) into the exhaust gas duct (104), and in that
- the operability of the secondary air flow is assessed on the basis of the signal for the secondary air flow, the intake air flow being the air volume or air mass flow taken in by the internal combustion engine (100).

2. Method according to Claim 1, characterized in that the secondary air system is assessed as operational when the signal for the secondary air flow is applied within a pre-determinable interval and as non-operational when the signal is applied outside the interval, the interval being pre-determinable as a function of the operating state of the internal combustion engine (100).

3. Method according to one of the preceding claims, characterized in that, to determine the signal for the secondary air flow the deviation of the quotient from the air/fuel ratio downstream of the opening of the secondary air line (118) into the exhaust gas duct (104) and the ratio, determined by calculation, of the intake air flow to fuel added per unit of time from the value 1 is multiplied by the intake air flow.

4. Method according to one of the preceding claims, characterized in that the signal for the intake air flow is generated by an air mass meter or air volume meter or is formed from a signal for the load and a signal for the rotational speed.

5. Method according to one of the preceding claims, characterized in that the signal for the intake air flow and/or the signal for the ratio, determined by calculation, of the intake air flow to fuel added per unit of time and/or the signal for the air/fuel ratio downstream of the opening of a secondary air line (118) into the exhaust gas duct (104) is averaged over a predeterminable interval of time.

6. Method according to one of the preceding claims, characterized in that the operability of the secondary air system is verified whenever the secondary air pump (120) is switched on in any case, in particular in the warm-up phase of the internal combustion engine (100).

7. Method according to one of the preceding claims, characterized in that the operability of the secondary air system is verified when a probe (114) is ready for operation to determine the air/fuel ratio.

8. Method according to one of the preceding claims, characterized in that the operability of the secondary air system is verified when a Lambda control is switched off in controlled operation.

9. Method according to one of claims 1 to 7, characterized in that the Lambda control is switched on as soon as a condition is met in-relation to the time since the internal combustion engine (100) was started, in relation to the temperature of the catalytic converter (116) measured or determined by a model, in relation to the integrated air mass or injected fuel mass since the internal combustion engine (100) was started or in relation to the number of crankshaft revolutions since the internal combustion engine (100) was started, and in that the operability of the secondary air system is verified when the Lambda control is switched on.

10. Apparatus for monitoring a secondary air system in conjunction with the exhaust gas system of a motor vehicle in accordance with the method according to Claim 1, characterized by
- first means (106) for generating a signal for the intake air flow,
- second means for generating a signal for the ratio, determined by calculation, of the intake air flow to fuel added per unit of time,
- third means (114) for generating a signal for the air/fuel ratio downstream of the opening of a secondary air line (118) into the exhaust gas duct (104) and
- fourth means for generating a signal for the secondary air flow from the signals generated by the first, second and third means (114),
- fifth means for assessing the operability of the secondary air system based on the signal generated by the fourth means,
- the intake air flow being the air volume or air mass flow taken in by the internal combustion engine (100).

## Revendications

1. Procédé de surveillance d'un système d'air secondaire en liaison avec un système de gaz d'échappement d'un moteur à combustion interne,
caractérisé en ce qu'
• on détermine un signal du flux d'air secondaire avec :
- un signal pour le flux d'air aspiré,
- un signal du rapport obtenu par calcul entre le flux d'air aspiré et le carburant dosé par le temps,
- un signal pour le rapport air/carburant fourni par une sonde (114), en aval de l'embouchure d'une conduite d'air secondaire (118) dans le canal des gaz d'échappement (104) et,
• on juge de l'aptitude à fonctionner du système d'air secondaire à l'aide du signal du flux d'air secondaire, le flux d'air aspiré étant le flux massique ou quantitatif d'air aspiré par le moteur à combustion interne (100).

2. Procédé selon la revendication 1,
caractérisé en ce que
le système d'air secondaire est estimé comme apte à fonctionner si le signal du flux d'air secondaire se situe à l'intérieur d'un intervalle prédéterminé et il est estimé comme non apte à fonctionner si le signal est à l'extérieur de cet intervalle, prédéterminé en fonction de l'état de fonctionnement du moteur à combustion interne (100).

3. Procédé selon l'une des revendications précédentes,
caractérisé en ce que
pour déterminer le signal du flux d'air secondaire on multiplie la déviation du quotient du rapport air/carburant en aval de l'embouchure de la conduite d'air secondaire 118 dans le canal des gaz d'échappement 104 et du rapport obtenu par calcul du flux d'air aspiré par rapport au carburant dosé par le temps, par rapport à la valeur 1, en multipliant par le flux d'air aspiré.

4. Procédé selon l'une des revendications précédentes,
caractérisé en ce que
le signal du flux d'air aspiré est formé par un débitmètre massique d'air ou un débitmètre quantitatif d'air et d'un signal de la charge ou d'un signal de la vitesse de rotation.

5. Procédé selon l'une des revendications précédentes,
caractérisé en ce que
le signal du flux d'air aspiré et/ou le signal du rapport obtenu par calcul entre le flux d'air aspiré et le carburant dosé par le temps et/ou le signal du rapport air/carburant en aval de l'embouchure une conduite d'air secondaire (118) dans le canal des gaz d'échappement (104) est pris en moyenne dans un intervalle de temps prédéterminé.

6. Procédé selon l'une des revendications précédentes,
caractérisé en ce que
l'aptitude au fonctionnement du système d'air secondaire est vérifiée si la pompe d'air secondaire (120) est de toute façon branchée, notamment au cours de la phase de chauffage du moteur à combustion interne (100).

7. Procédé selon l'une quelconque des revendications précédentes,
caractérisé en ce qu'
on vérifie l'aptitude au fonctionnement du système d'air secondaire pour une sonde (114) prête à fonctionner et servant à déterminer le rapport air/carburant.

8. Procédé selon l'une des revendications précédentes,
caractérisé en ce qu'
on vérifie l'aptitude au fonctionnement du système d'air secondaire lorsque la régulation Lambda est coupée, en mode de fonctionnement commandé.

9. Procédé selon l'une des revendications 1 à 7,
caractérisé en ce qu'
on branche la régulation Lambda, dès qu'une condition est satisfaite concernant le temps écoulé à partir du démarrage du moteur à combustion interne (100), ou de la température mesurée ou obtenue à partir d'un modèle pour le catalyseur (116) ou de la masse d'air ou de la masse de carburant à injecter, intégrées à partir du démarrage du moteur à combustion interne (100) ou encore du nombre de rotations du vilebrequin depuis le démarrage du moteur (100) et on vérifie l'aptitude au fonctionnement du système d'air secondaire lorsque la régulation Lambda est branchée.

10. Dispositif de surveillance d'un système d'air secondaire en liaison avec un système de gaz d'échappement d'un moteur à combustion interne selon le procédé de la revendication 1,
caractérisé par
• des premiers moyens (106) générant un signal pour le flux d'air aspiré,
• des seconds moyens générant un signal pour le rapport obtenu par le calcul entre le flux d'air aspiré et le carburant dosé en fonction du temps,
• des troisièmes moyens (114) générant un signal du rapport air/carburant en aval de l'embouchure d'une conduite d'air secondaire (118) dans le canal des gaz d'échappement (104) et,
• des quatrièmes moyens pour générer un signal du flux d'air secondaire à partir des signaux fournis par le premier, second et troisième moyen (114),
• des cinquièmes moyens pour juger de l'aptitude à fonctionner du système d'air secondaire à l'aide du signal généré par les quatrièmes moyens et,
• le flux d'air aspiré est le flux massique ou quantitatif d'air aspiré par le moteur à combustion interne (100).
